# EUROPEAN PATENT APPLICATION

(11) **EP 2 299 360 A1**
(43) Date of publication of application: **23.03.2011**
(21) Application number: 09170728.1
(22) Date of filing: 18.09.2009
(51) Int. Cl.: G06F 9/455, H04L 29/08

(54) **process for installing a software application and platform operating system**

(71) Applicant: Group Business Software AG, 99817 Eisenach (DE)
(72) Inventor: Ott, Joerg, 99817 Eisenach (DE); Sjoerup, Carsten, 3480 Fredensborg (DK)
(74) Representative: Ganahl, Bernhard

(57) **Abstract**

The invention relates to a process for installing a software application on a platform, wherein the platform comprises several servers including one or more application servers (2) and a control server (3) on which a platform configuration database is installed, comprising the following steps after a predefined software application is selected by an user:
- reading out configuration data and solution data from the platform configuration database wherein the registration data describes the platform configuration and the solution data describes a solution of the selected software application which is registered on the platform,
- determining the virtual server(s) which is needed to run the selected software application,
- creating the determined virtual server(s) on the platform,
- installing an instance of the selected software application in the created virtual server(s),
- connecting the instance to an interface of the platform to provide an access for listeners to the instance.

## Description

The present invention relates to a process for installing a software application and a platform operating system. Particularly, the present invention relates to a process for installing a software application and a platform operating system which allow the so called software as a service (SaaS), where user can use a certain software running on the platform, wherein the user access this software by means of a client computer via a wide area network.

A single tenant software is a software which is designed to run on a single server usually in a local area network. It is not possible to install two runtime versions of a single tenant software on one server, as there would be a conflict between the two runtime versions.

If a single tenant software shall be used on a server in a software as a service (SaaS) then the single tenant software has to be rewritten in a multi tenant architecture, so that at least the working data of each user are strictly separated from each other. Advantageous a plurality of runtime versions (instances) of this software are simultaneously executable on a server, wherein to each instance a separate storage space is assigned to which only the certain instance has access to.

It is very labour-intensive to rewrite an existing single tenant software into a multi tenant software.

The software Lotus Domino from IBM Corporation, USA, is a single tenant software. To use this software as a service an instance of this software has to be installed for each customer (tenant) into a server (physical or virtual). The installation of an instance in a server is very cumbersome, because the creation of a server and the installation of the software into the server needs highly skilled personnel and takes long time. Therefore, the software Lotus Domino is only offered as software as a service, by IBM directly, for customers with at least 1.000 users to accommodate for the use of server and manual labour. This software is then installed an a separate physical server for SaaS.

If Lotus Domino were a multi tenant software, several runtime versions could be easily installed on one server for the use of different customers. The software Microsoft Exchange is a multi tenant software, which is offered to users of any size as a software as a service. For small customers with less than 1.000 users Microsoft Exchange is the market leader as for such customers Lotus Domino is for customers with less than 1000 users only as a single tenant software for on-site installation available.

There are several server operating systems which allow the setup of a virtual server. A virtual server is an isolated software container that can run its own operating system and applications as if it were a physical computer. A virtual server behaves exactly like a physical computer and contains its own virtual (i.e. software-based) CPU, RAM, hard disk and network interface card. Virtual servers are also called virtual machines.

Such server operating systems are e.g. VMware ESXi and Linux xen. There are also software packages which can be run on an ordinary server operating system and which allow the setup of virtual servers. Such a software package is for example Parallels® Virtuozzo Containers from Parallels GmbH, Germany, which can be run on a Windows Server 2003 and Linux.

There is a significant need for a solution to run a plurality of instances of a single tenant software on a server to allow the software as a service.

The object of the present invention is to provide a process for installing a software application, a platform operating system and a system which allow running a plurality of instances of a single tenant software simultaneously on a server.

The object of the present invention is solved by a process for installing a software according to claim 1, by a platform operating system according to claim 9 and a platform according to claim 10. Advantageous embodiments are given in the respective sub-claims.

The object of the present invention is solved by a process for installing a software application on a platform, wherein the platform comprises several servers including one or more application servers and a control server on which a platform configuration database is installed, comprising the following steps after a predefined software application is selected by an user:
- reading out configuration data and solution data from the platform configuration database wherein the configuration data describes the platform configuration and the solution data describes a solution of the selected software application which is registered on the platform,
- determining the virtual server(s) which is/are needed to run the selected software application,
- creating the determined virtual server(s) on the platform,
- installing an instance of the selected software application in the created virtual server(s),
- connecting the instance to an interface of the platform to provide an access for listeners to the instance.

The process according to the present inventions allows to use a single tenant software on a server in the same way as a multi tenant software so that a plurality of instances of this software can be installed on one server and a plurality of listeners can use this software without causing any data conflict or creating any loss of security. There is no need to change the architecture of a single tenant software.

This process is controlled by a platform operating system which provides to the platform the function of automatically installing instances in virtual servers. This is made possible as the platform operating system maintains and updates a platform configuration database in which at least all relevant information is stored defining the configuration of the platform including the type of installed hardware (e.g. servers, switches, etc.), installed and available software (server operating systems, firewall, software applications, etc.), and user specific data. The automatic maintenance of this data makes it possible to automatically control the installation so that an automatic installation of complete server systems is possible.

The interface of the platform is usually a firewall server.

This process can be used very advantageously in a load balancing routine which is running on a platform to balance the computational load of the individual physical servers. The process for installing a software application allows automatically installing and duplicating virtual servers. As the job of a virtual server on a first physical server can be taken over from a duplicated virtual server on a second physical server the virtual server on the first physical server can be shut down without any interruption of the corresponding service to the listener. Thus it is possible to move virtual servers in the platform from one physical server to another physical server. So the virtual servers can be automatically rearranged on the physical servers of a platform. This makes it possible that physical servers can be automatically started up and shut down according to the demanded computational load. Therewith it is possible to run a platform with only the amount of actually needed physical servers. If more computation power is needed then it is possible to start up new servers and to automatically install instances in new virtual servers. For the installation of a new virtual server and the corresponding instance only some minutes are needed.

The system comprises a **platform** with one or more physical servers and the **platform operating system (POS)** comprising the function of automatically creating a virtual server when a new instance is installed on the platform.

A **platform configuration database (PCD)** is an internal database of the platform operating system which can be accessed only by the platform operating system.

A **software application** is any coded software in source code or runtime-code which may be in a single or a multi tenant architecture.

An **instance** is an executable runtime version of a software application which is stored in the main storage of a computer.

A **solution** comprises one or more software applications which are registered on the platform together with all necessary settings to run the software application on the platform.

A **user** is someone who administrates and/or initiates on behalf of someone else the installation of a solution and/or an instance on the platform.

A **listener** is a user who is using an instance on the platform.

The invention is explained in more detail by means of the enclosed drawings which so examples of the present invention. The drawings show in:
- Figure 1: schematically a platform which is connected to the internet,
- Figure 2: schematically a control server on which basic elements of the platform operating system are installed,
- Figure 3: the software structure of a physical server,
- Figure 4a - 4 g: screenshots of an embodiment of the present invention,
- Figure 5: a screenshot with listing of events,
- Figure 6: an XML-file for a web-service,
- Figure 7: a listing of solution setting templates which is a part of a platform con- figuration database, and
- Figure 8: an SSH script which is called to change the settings from Figure 7.

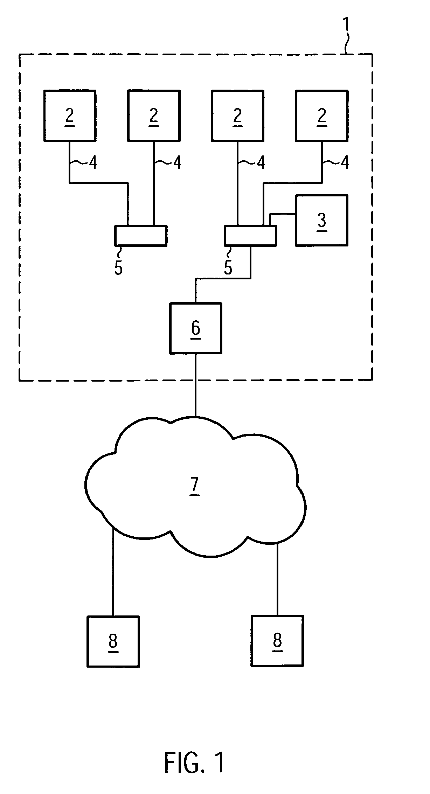

The platform 1 comprises several application servers 2 and at least one control server 3 (Fig. 1). The application servers 2 are provided for hosting the instances which can be accessed by the listeners. The application servers 2 can run with different server operating systems.

The control server 3 controls the basic functions of the platform and comprises the main parts of the platform operating system which is described below in more detail. The servers 2, 3 are connected via data lines 4 with one ore more switches 5.

A firewall server 6 is connected by means of a further data line 4 also to one of the switches 5.

Each server 2, 3, 6 comprises a hardware interface for being connected to the data lines 4. These hardware interfaces, the data lines 4 and the switches 5 form a physical network.

The depicted embodiment according to figure 1 comprises several physical servers 2, 3, 6. Basically, the invention can also be carried out on a single physical server, on which the application servers, control server and firewall server are installed as virtual servers. As a rule it is preferable that a platform comprises a plurality of physical servers e.g. 10 to 100 physical servers or even more.

On each application server 2 a server operating system is installed which allows creating virtual servers. Such server operating systems are VMware ESXi and Linux xen. There are also software packages which can be run on an ordinary server operating system and which allow the setup of virtual servers. Such a software package is for example Parallels® Virtuozzo Containers from Parallels GmbH, Germany.

It is possible that in the platform 1 on different physical servers different server operating systems are installed.

On the firewall server 6 a firewall software is installed through which a data connection to a wide area network (WAN) is provided. The wide area network 7 is typically the internet but it can be also any other kind of network. Client computers 8 are connected to the wide area network 7 so that a data communication between the platform 1 and the client computers 8 can be established. The client computers 8 are used by the listeners to access an instance installed on the platform 1.

A main part of the platform operating system is a platform configuration database 9. The platform configuration database comprises several tables 10 for
- configuration data of the platform,
- user information,
- which user(s) can provide which solution(s),
- which user(s) has installed which solution(s),
- listener information,
- data about installed solutions,
- event data,
- solution settings,
- user settings,
- software applications,
- server operating systems data,
- etc.

The table for configuration data of the platform of the platform configuration database 9 comprises configuration details of all servers of the platform 1.

The table for server operating systems data comprises information which operating systems are installed on the different physical application servers 2.

The table for user information comprises user specific data. This user specific data comprise e.g. the name, the rights of users, and identification data of users and further user specific data.

The table for software applications comprises data which software applications are registered and where the corresponding files are stored.

Some of these tables contain data describing the configuration of the platform. This data is called configuration data. Some of the tables contain data describing the solutions of the platform. This data is called solution data.

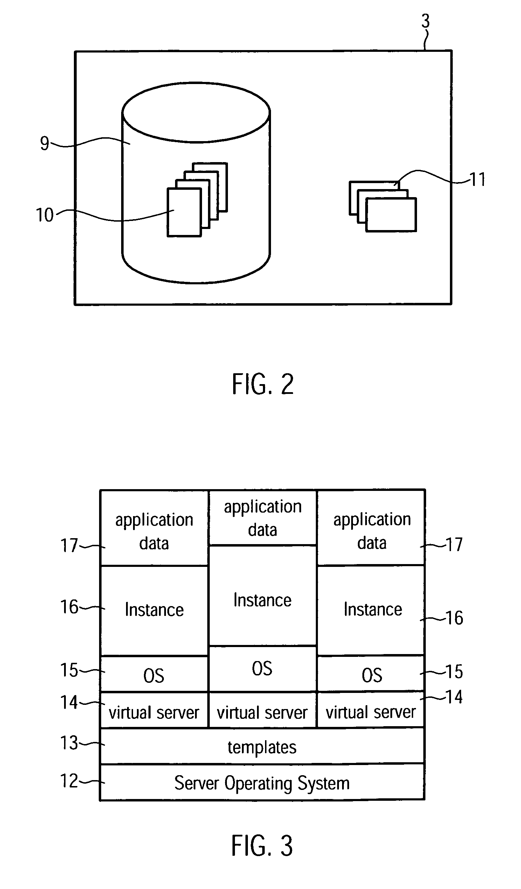

Installation files 11 (msi-files or rpm-files) for certain software applications are stored on the control server 3 (Fig. 2).

The platform operating system comprises a plurality of routines for registering a new software application, for creating a new instance and for further purposes.

The platform operating system comprises a function for registering of software applications.

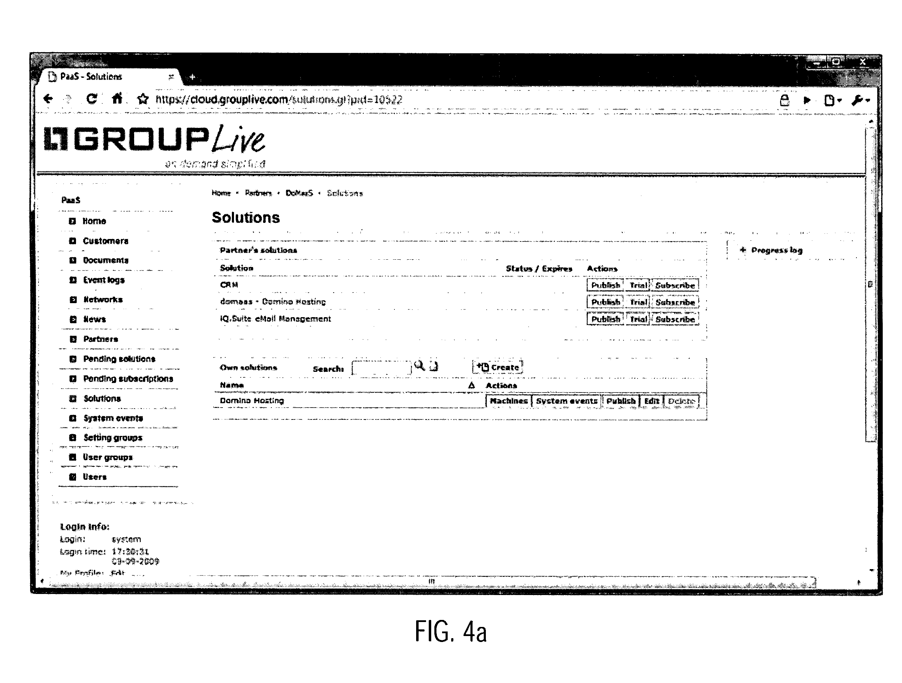

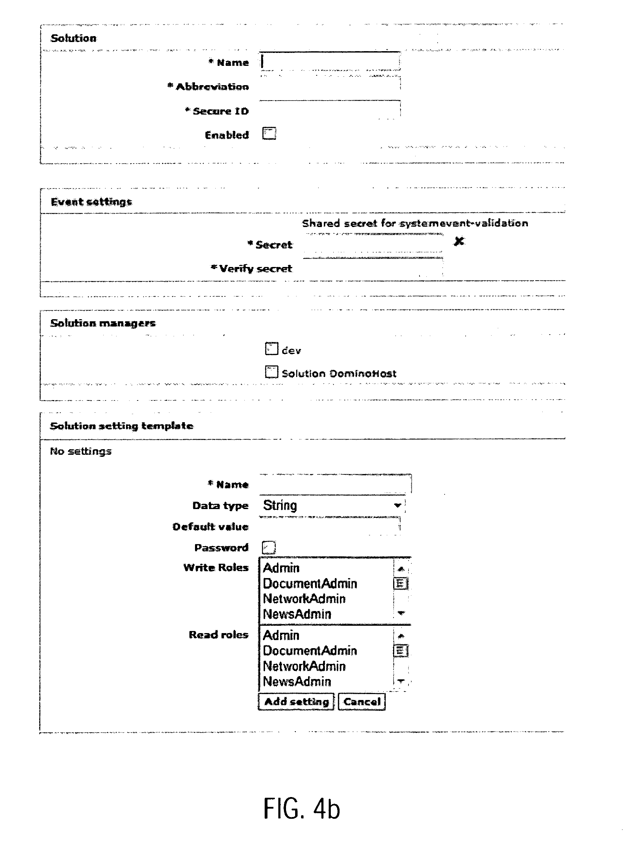

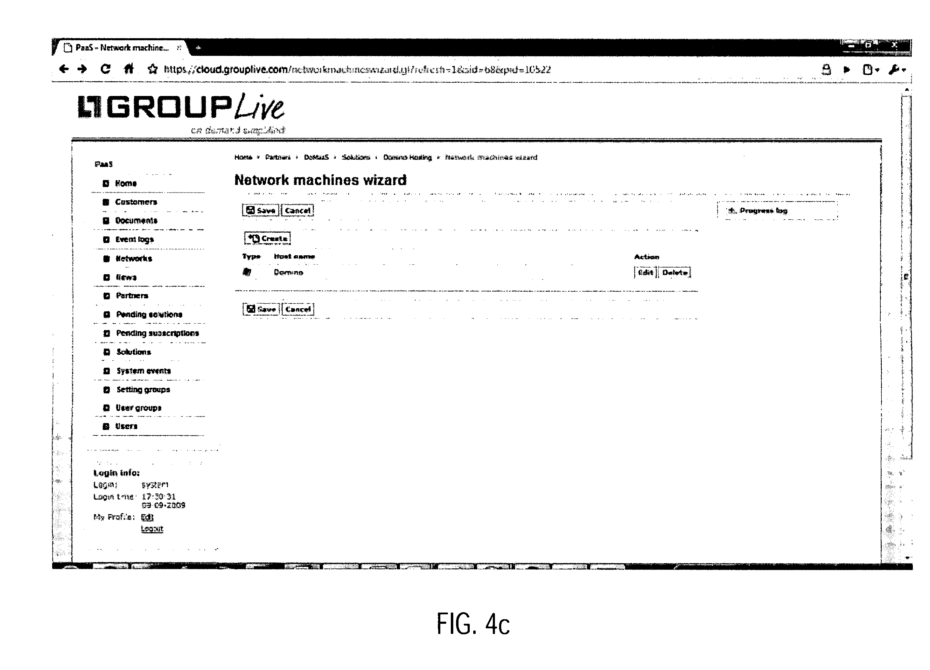

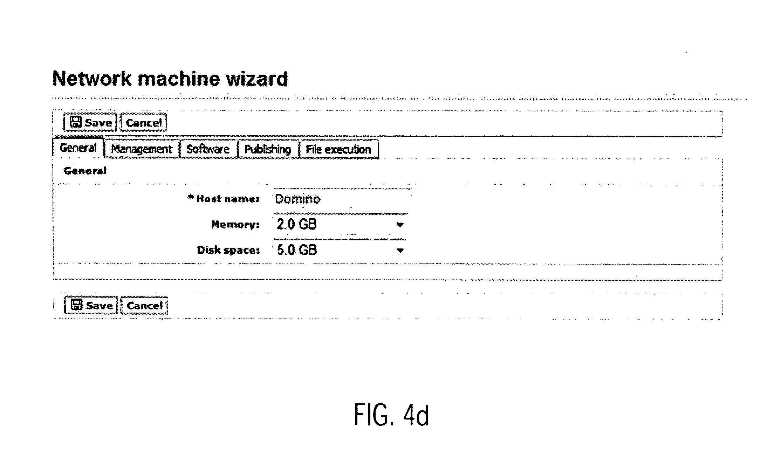

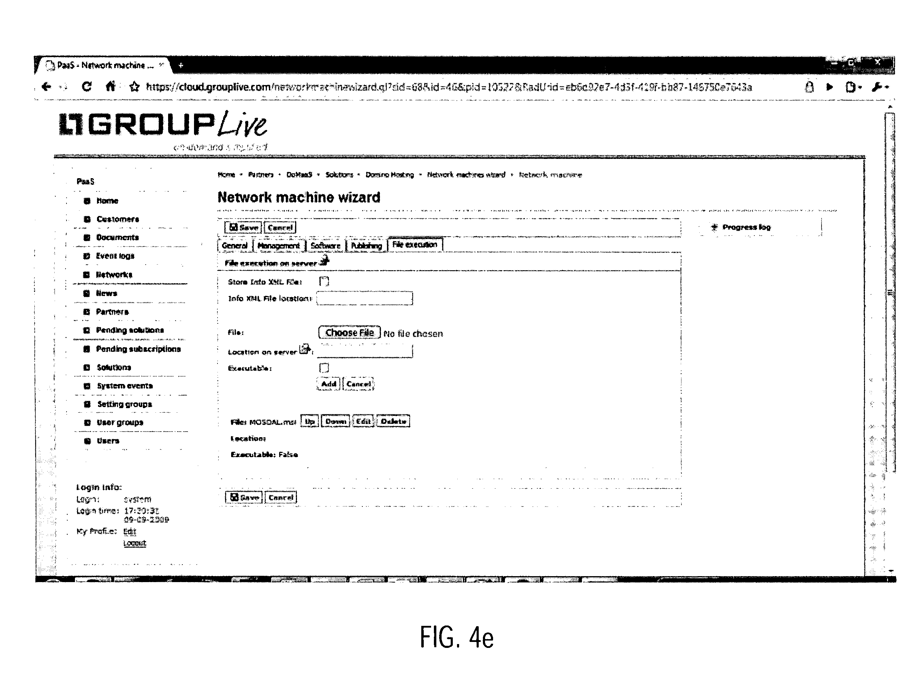

For registering of a new software application the following steps have to be carried out:
- The user of the platform has to sign up the platform.
- He can create a new solution by entering a new name in the corresponding menu of the platform operating system. In the menu "solutions" (Fig. 4a) new names can be entered after clicking the button "Create" (Fig. 4b). The new name is in the enclosed example "Domino Hosting". When a new name for a new solution is entered the user is asked for a secure-ID and a password. The secure-ID and the password are used by the platform operating system to communicate with the specific solution.
- During registration of a new software application optionally settings can be defined. The menus for defining these settings can be entered in the menu "solutions" by clicking on the buttons "machines", "system events", "publish" and "edit". The term "machine" on the button "machine" stands for "virtual server".
- A click on the button "machines" opens the menu "network machines wizard" in which a list of virtual servers for running the solution is given (Fig. 4c).
- A click on the button "Create" or "Edit" opens a sub-menu in "network machine wizard" comprising several sliders, namely "general", "management", "software", "publishing", and "file execution" for defining the settings of each individual virtual servers. The button "Create" allows entering a new name of a virtual server, wherein with the button "Edit" the same menu is opened for editing an already existing server.
- The user has to define the operating system, the amount of memory (RAM) and the amount of hard disk space (Fig. 4d).
- For one solution one or more machines can be assigned with the same or different configurations.
- With the slider "file execution" a menu for loading an installation file of a software application for a solution is opened (Fig. 4e). Any files, particularly installation files, can be uploaded. These files 11 are stored on the control server 3 and it can be specified where these files are placed on the virtual server during installation (Fig. 2). The name and place of these files is stored in the platform configuration database. Such installation files are for example msi-files (Microsoft Software Installation) or rpm-files for Linux systems. In this menu an XML-file with customer specific information can be specified and it can be defined where it should be placed on the virtual server.

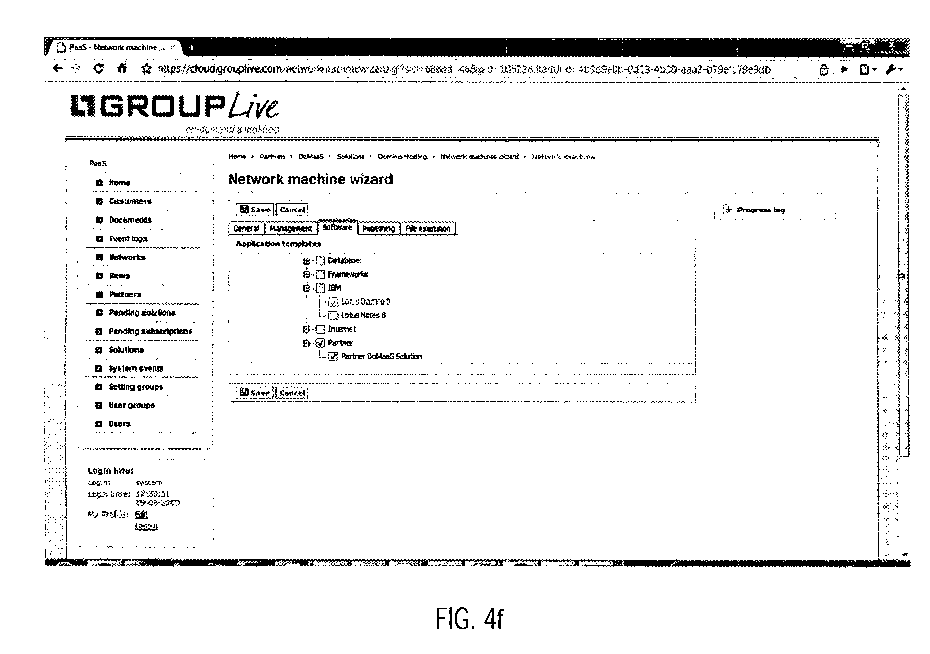

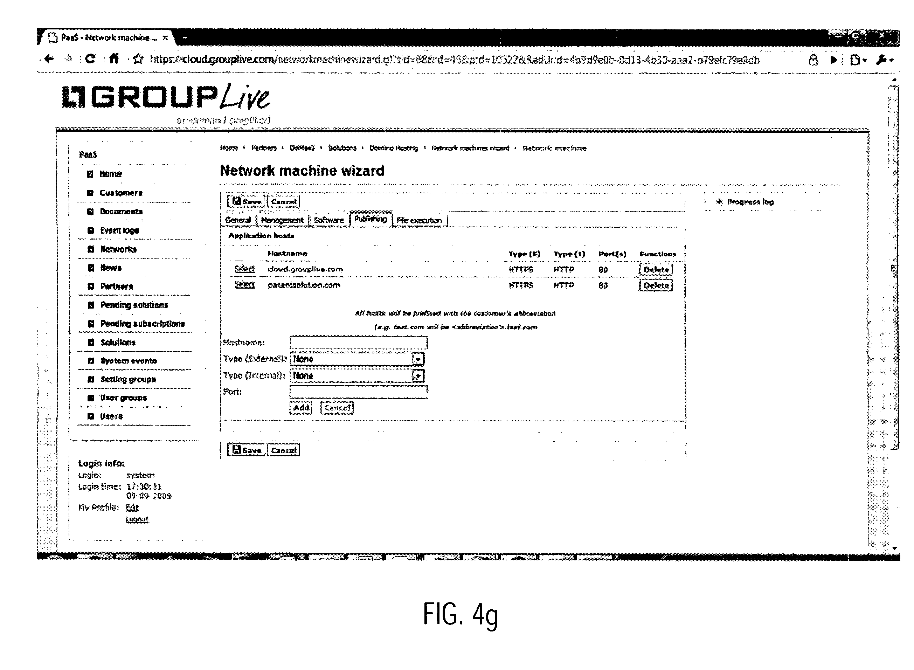

Instead of ordinary installation files it is also possible to provide a template with one or more image-files of a certain software application. It is also possible to install besides ordinary installation files image-files which are immediately executable runtime versions (instances) of a software application if loaded to a predefined virtual machine. These image files are to be stored on the application servers 2, wherein a copy of a predefined template is stored to each suitable application server 2. A suitable application server 2 is a server on which a server operating system is installed on which a virtual server and an operating system can be set up which are suitable for the software application defined by the image files of the respective template. A software application can comprise several image files. These image files for installing a software application are collected in an application template. It is also possible to provide data for a certain software application by means of image files. These image files are collected in data templates. The templates comprise besides the image file a loading file in which the order is defined with which the image files of the respective template have to be loaded. In the embodiment from which screenshots are shown in the Figures 4a - 4g only the administrator of the platform can upload image files and create templates. However, the platform operating system can also contain a routine for uploading image files, creating templates and automatically distributing the templates to the suitable application servers 2.
- Thus this slider allows the loading of a new software application to the platform.
- With the slider "software" it is possible to choose already stored application templates. On this slider directories are displayed for different application templates. Each application template comprises one or more image files of a certain software application. It is also possible that several application templates are linked to each other. In the present example the software application of a partner which is called DoMaaS solution is based on Lotus Domino 8 (Fig. 4f). Thus selecting the software application DoMaaS solution also selects automatically the software application Lotus Domino 8.
- With the slider "publishing" it is defined how the specific solution is published to the internet, namely, that a public URL will point to this virtual server after installation of a solution (Fig. 4g). This means that a public DNS entry is registered in the firewall. The platform operating system comprises a routine for automatically creating such DNSs, wherein for example a prefix is automatically created like cust1.cloud.grouplive.com, cust2.cloud.grouplive.com, cust3.cloud.grouplive.com, etc, wherein cust1 is a prefix which stands for Customer No. 1. The communication between the servers 2, 3 and the firewall server 6 is carried out by means of http- or https-protocol.
- With the registration of such a solution all necessary data are entered for automatically creating a virtual server and installing an executable runtime version of the software application in this virtual server.

A solution can be registered in such a way that a user and/or a listener can initiate an installation of the solution on the platform. An installation of a solution means that a new instance of the software application of the solution is created in a virtual server. A user will initiate the installation on behalf of a listener.

An installation is started by clicking the button "subscribe". If listener specific data have to be entered they will be automatically requested by a certain dialog. Nothing else is to be done. When the installation process is started the following steps are automatically carried out:

### Step S1: Preparing the installation

- The selected solution is looked up in the platform configuration database (PCD).
- The necessary size of a network is determined on the basis of the registered data for the solution, particularly on the basis of the number of virtual servers. Thus the necessary number of IP-addresses are reserved e.g. for one virtual server four IP-addresses, for two to four virtual servers eight IP-addresses and for five to thirteen virtual servers 16 IP-addresses are reserved.

### Step S2: Assigning a private virtual network

A private virtual network is automatically created. In the present embodiment a unique number between 1 to 4,000 is assigned in the platform to the new virtual network. From the platform configuration database the kind of network hardware and the kind of firewall are read out. On the basis of this information the switches of the physical network and the firewall are automatically programmed with the hardware-specific commands to install the private virtual network on the platform. Optionally vpn rules are programmed in the firewall and further firewall setups are optionally automatically programmed.

### Step S3: Creating a virtual server

The registered data of the solution are read out which define the virtual server(s). These data comprises information about the suitable operation systems of the application server 2 and certain setup data.

Then the platform configuration database is read out with respect to the data describing the physical servers and the already existing installations in the platform. This data are used to automatically determine on which physical server the needed virtual server(s) can be installed. Usually a plurality of physical servers is suitable to install the needed virtual server(s). For a certain virtual server the suitable physical server (application server 2) is selected on which the least number of virtual servers are running. The present platform operating system comprises the platform configuration database in which the relevant information about the physical servers is maintained and a routine for updating and a determination routine for determining suitable physical servers for installing a virtual server.

By creating a virtual server an ordinary installation routine for installing a virtual server is started and the corresponding parameters as IP-number, host-name are automatically input to the installation process. This installation process also comprises the installation of a predefined operating system in the virtual server. If required the corresponding parameters are automatically read out from the registered information or are automatically created or fetched from a certain place, e.g. in the internet, on the basis of the registered information. However, it is also possible to create a virtual server by means of a server template comprising one or more image files which are just loaded into the application server.

The creation of the virtual server comprises also connecting the virtual server to the private virtual network. This is done by a routine which assigns one of the IP-addresses reserved for the virtual network to the virtual server.

For creating one or more users on the newly created virtual server the type of the virtual server is read out from the platform configuration database by a specific user routine for creating the users. The "type of virtual server" means also the type of the operating system installed in the respective virtual server. On the basis of the type of virtual server the user routine set up the users in the virtual server. Each type of virtual server - even different Linux-flavours - requires different commands for creating the users. The user routine is designed to creating users on different types of virtual servers by means of the data read out from the platform configuration database.

### Step S4: Installing the selected solution

The installation of the selected solution is automatically started. This can be done by automatically starting an ordinary installation routine which can be provided in the form of msi-file or an rpm-file on the control server 3. The msi-file or RPM file is specified under a file executing tab, meaning that the file will be copied from the control server 3 to the new virtual server during installation. This file is executed with uploading the executable installation file to the virtual server, which initiates the installation. The necessary parameters are automatically read out from the platform configuration database and entered into the installation process.

The solution can alternatively be installed just by loading an application template comprising one or more image files of the solution from the corresponding application server 2 into the virtual server installed on this application server. This is the preferred way of installation, as it is very quick. As for each solution a separate virtual server is created the environment, namely the virtual server and the operating system running on this virtual server and the corresponding settings for the instance are exactly defined. Thus it is easy to install the solution just by loading an application template as the environment is nearly always the same. If the application template comprises a number of images then the images have to be loaded in a certain order. This is automatically controlled by the system by means of the loading file which is contained in the application template.

### Step S5: Running custom post-process code

One ore more batch-files can be run automatically to adapt the installation to a final configuration. These batch-files can be automatically executed after the registration of the solution. It is also possible that the user creates manually such a batch-file for each solution to define certain settings. A typical action of such batch-files is e.g. to adapt the instance in such a way that the instance is automatically started when the corresponding virtual server starts. With such batch-files it is also possible to configure specific values in a database.

### Step S6: Set up events

The platform operating system provides a function that on certain events a predefined service is carried out. These events and the corresponding code are defined in an event file which is created automatically or manually when the solution is registered at the system. The event system comprises a routine in the platform operating system which monitors certain events. Such an event can be any action which is carried out automatically or manually. Each event points by means of a pointer to a certain service routine. The pointer is preferably a URL which points to the service routine. The service routine will receive on an event preferably an XML-file containing data of the platform configuration database, wherein that data is used to carry out the predetermined service routine. These events can be regarded as a kind of software-interrupts.

For example, some solutions comprise user databases in which the data of the listeners are stored. As the listeners have to be defined it is possible to synchronize the definitions of users of the virtual server (=listeners) and of the instance in such a way that if a new listener is created on the platform then this is detected as an event which triggers the start of a routine which reads out the corresponding parameters of the user definitions with respect to this solution from the platform and enters corresponding user definitions in the instance of the solution. This can be done by means of a database which is installed on that virtual server. This database should be filled with predefined parameters like the customer's name and address. Then the event system can be used to receive the customer specific information from the platform configuration database or a user specific XML file which is stored on the control server and which is registered in the platform configuration database. The necessary records are created in the database just after installation by using an executable file which is also uploaded to the virtual server.

### Step S7: Assigning an automatic scripts on settings

Predefined scripts are assigned to certain changes of settings. For example if a new password is entered in the solution a corresponding script is automatically started for registering the new password in the relevant parts of the platform operating system. A further example is if one of the solution settings of the instance is the listener's website and that is stored in a databases on the virtual server. This is e.g. useful to automatically enter the URL of the listener's website into a signature when listeners are sending emails out from the system. If the listener's website URL changes then an event is called to change the URL in the database.

### Step S8: Publishing the solution for the listener

To make the solution available to the respective listeners it has to be published in the firewall. The listeners of the instance need not coincide with the user who was starting the installation of the solution on the platform. Usually there is a large amount of listeners who are using a certain solution, wherein the installation of such a solution is initiated usually only by a single user. This single user can of course be one of the listeners. The creation of the publishing rules begins with determining the type of firewall and reading out the relevant information to the registered listeners of this solution. Then the firewall is automatically programmed. This programming comprises for example the definition of the host-names of the listeners and the corresponding requests which are mapped to the internal private virtual network and the virtual machine (s). The corresponding information is received from the registered configuration of the solution.

The steps S1 to S8 are carried completely automatically. Usually this takes about three minutes to ten minutes. This depends on the size of the solution and the provided computing power on the platform.

The event system and the means for publishing the solution for a listener form a generic mechanism to exchange information and integrate applications which are based on events and XML web-services. This means that any application can be integrated using standard interfaces.

Figure 3 shows the software structure on an application server 2 after the installation of several instances on this application server. The server operating system 12 forms the basic layer. On this basic layer the templates 13 are provide. On the server operating system 12 several server installations 14 are provided, wherein each server installation forms an individual virtual server.

In each server installation 14 an operating system 15 is running.

The instance 16 is installed on the operating system 15. The instance 16 has access to a memory space containing application data 17.

On one application server 2 several server installations 14 can be provided so that several virtual servers can simultaneously run on one physical server. These virtual servers run each their own operating system, so the instances and the application data are clearly separated from an instance and the application data of another virtual server.

The above platform operating systems is designed for automatically installing single tenant software application to a platform. Of course it can also be used for multi tenant software applications.

In the following the invention is described by means of examples. The first example is a solution which uses Lotus Domino 8 as a software application.

This solution is called "Domaas". By this solution listeners can get a Domino webmail environment in just a few mouse clicks. This solution provides for each listener a virtual server where Lotus Domino 8 is installed. The listener or a customer of the platform who provides this service to listeners only needs to sign up through the platform and all the administration of the respective listener is done by the platform. This means that the listener will never log-on to the virtual machine other than when accessing his mailbox from a web browser. Each listener will get his own URL which is pointing to the corresponding virtual server. The listeners are usually business enterprises which subscribe a certain software application by a user of the platform. Each listener comprises usually several end-users who are using the instance running on the platform. All end-users can access their mail by logging in with a user name and a password. When this solution is installed the above described steps S1 to S8 are carried out automatically. Herewith the following is achieved:
1. A virtual machine with the operating system Windows 2003 is created.
2. An instance of Lotus Domino 8 is installed by means of loading an application template.
3. A domino database with all the web services with which the platform has to communicate is installed by means of data template.
4. A URL is created which is specific to the listener who subscribed this solution.

As the software application Lotus Domino 8 comprises a user database for the end-users the administration actions for synchronizing the registered end-users in the platform operating system and the virtual server on one side and the user database of Lotus Domino 8 on the other side are configured in the event system. The following events are configured:

### On remove the solution from the platform (Soft):

1. Remove all end-users' access to the mail file.

### On remove the solution from the platform (Hard):

1. Delete all end-users and mailboxes in the system

### Remove account:

1. Delete all end-users' and mailboxes in the system

### Account disable:

1. Remove all end-users' access to the mail files.

### Account enable:

1. Give all end-users' access to their mail file.

### Add end-user (Relate end-user to solution):

1. Send information from the platform to the instance on the virtual server specific to that listener that this end-user needs to have a mailbox on the system.
2. The services then do the following:
   a. Create the user in the virtual server's user directory (NAB)
   b. Create a new mailbox
   c. Assign rights to the new end-user to access the new mailbox

### Update end-user:

1. Update the end-user data in the instance's directory e.g. new email address, new password etc.

### Remove end-user from solution:

1. Remove the end-user and the end-users' mailbox in the system

### Disable end-user:

1. Remove all user access to the mail file

### Enable end-user:

1. Give end-user access to the mail file

Domaas will take around 2 minutes to install. At that point the listener is ready to add end-users to the solution.

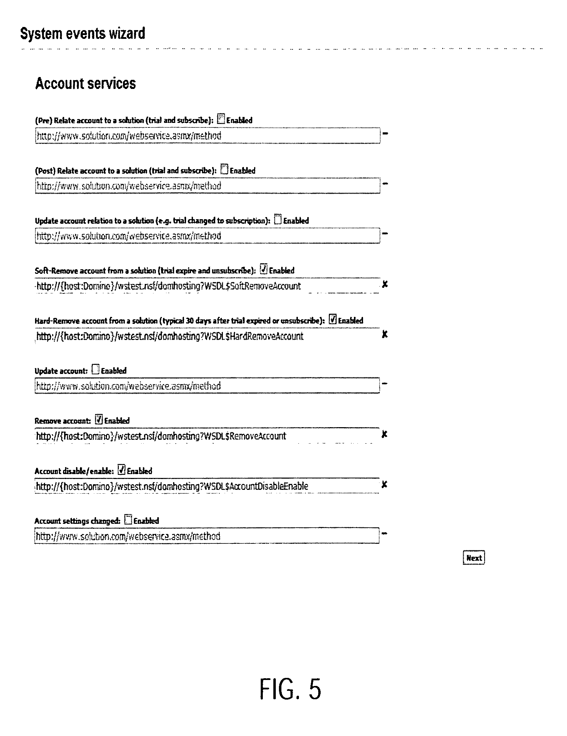

A listing of the events is shown in Figure 5 which is a screenshot. The user of the platform can enable each event separately. In this listing the URLs are given for each event.

The first part of the URL inside the "{...}" tags is a dynamic pointer in use the dynamic pointer is replaced by a certain value which is in the present case an identification of the user of the platform. This means that the web service is installed on all the virtual servers and the platform takes care of the individual services that are called.

The functionality which Domaas provides is normally hosted on premise. If the "time to use" on the on premise solution is compared with having the solution via Domaas, the time difference from the decision is taken until the solution is running is enormous.

On Domaas it is just a few mouse clicks and the solution runs. In an on premise solution the physical hardware needs to be bought and delivered. The new hardware should have a basic operating system installed and Domino on top of it.

The end-users should be created and maintained in the Domino directory, typically by a high skilled IT person. The person also needs to maintain the hardware, like making sure that everything runs as it supposed to.

Also a person with knowledge of mx records should make sure that a public domain name is pointing to the right IP address, so that emails can reach the server and another URL should be configured for the end-users, to make sure that emails can be accessed from anywhere over the internet. A network person should configure the company's firewall to ensure that all mail communication coming in to the firewall is routed to the new server.

The above steps, including waiting for the hardware, can take up to a month from the decision is taken to an on premise installation is in place.

As it is possible with the present invention to fully automize the installation of the software application Lotus Domino 8 in a virtual server this single tenant software can be provided as software as a service (SaaS) with all the advantages of a software as a service system. This is achieved by providing a platform operating system comprising a platform configuration data base containing all platform specific data which are needed for installing a virtual server. Thus the platform operating system can automatically read out the relevant data of the platform configuration database and initiate the installation of the virtual server. Furthermore the solution Domaas comprises on the platform registered data and files for installing automatically the respective instance into the virtual machine.

The registration of the solution is simple and can be carried out by any user having average IT-skills like a person who is administrating an on premise solution. This solution can then be repeatedly installed for different listeners without any additional effort.

A second example is a solution for the software application WebCrypt. WebCrypt is used to encrypt emails before they are sent to the recipients. WebCrypt is typically used in connection with an email software product called iQ-Suite®. iQ-Suite® can among other things distribute emails which meets certain rules to a WebCrypt server. The WebCrypt server will then automatically encrypt these emails and send the encrypted emails to the specified recipients.

The platform solution according to this embodiment requires that the listeners have iQ-Suite® in house. In WebCrypt usually some administrators are defined who can change the configuration parameters in the system, which are stored in configuration files and in a database. Besides the administrators end-users are automatically created in the system when the first email is sent to them via WebCrypt.

WebCrypt is Linux based and is using a MySQL database to store configuration values and other settings. When the solution WebCrypt is installed as an instance on the platform it is necessary that the user or the listener answers parameter questions during the installation. There are a few things which should be provided to enable the platform for carrying out the installation:
1. A silent installer shall be provided in the platform. A silent installer needs only parameters which are imported and these should be provided to the silent installer as parameters when the silent installer is initiated. Thus, the silent installer is an installer routine which does not need any user action. The silent installer is started by an ssh script after the installation of the virtual server.
2. Some ssh scripts shall be provided which can comprise configuration values based on parameters (=solution settings).
3. Configuration files shall be generated, which the listener can import to his own on premise iQ-Suite® system to minimize the manual work to configure the solution.

To provide all these elements the above described steps S1 to S8 carry out the following actions:
1. Creating a virtual machine with Fedora 10 as operating system.
2. Installing in the virtual server MYSQL and SSL for Apache by means of application templates
3. Creating a directory to copy setup files to the directory by means of a data template.
4. Copy the installation files to the virtual server, wherein the installation files are provided from the control server 3.
5. Unpacking the installation files.
6. Running the installation.
7. Creating a URL which is specific to the listener who just signed up.
8. Creating an email and configuration file and sending the email together with the configuration files to the listener who signed up. The configuration files are already prepared to point to the new virtual server for the listener. The email contains also information about how to import the files into the on premise iQ-

Suite^{®} system. As the review solution settings which need to be provided from the listener, the email also describes how to set them up in the platform.

The solution WebCrypt uses the event system for creating and sending the email and the configuration files. A corresponding service is registered by means of an URL in the event "(post) relate account to a solution (trial and subscribe)" which is shown in figure... This calls a webservice, which then generates the email and the configuration files and send them to the listener which signed up.

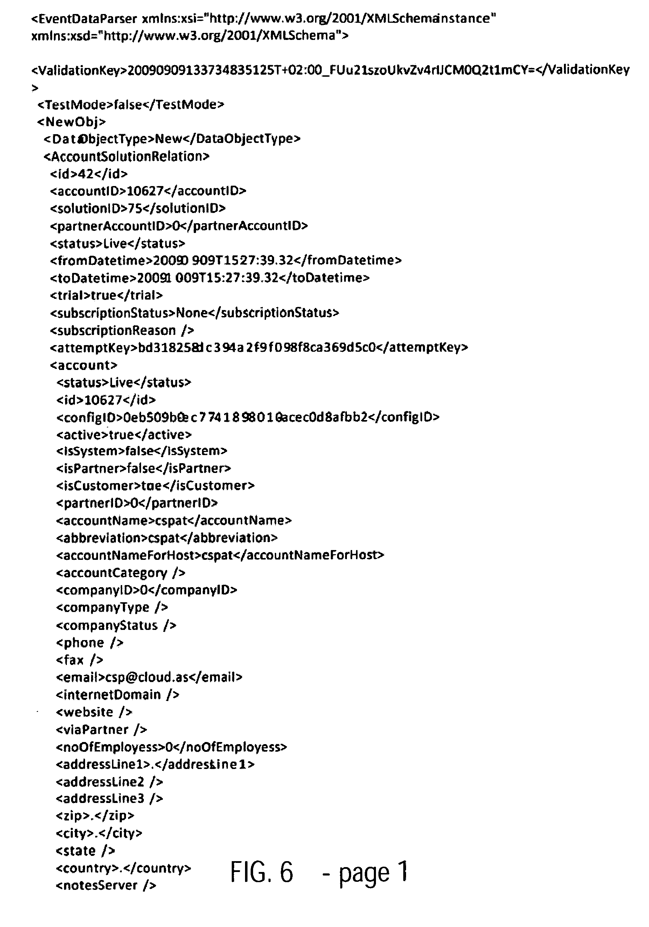

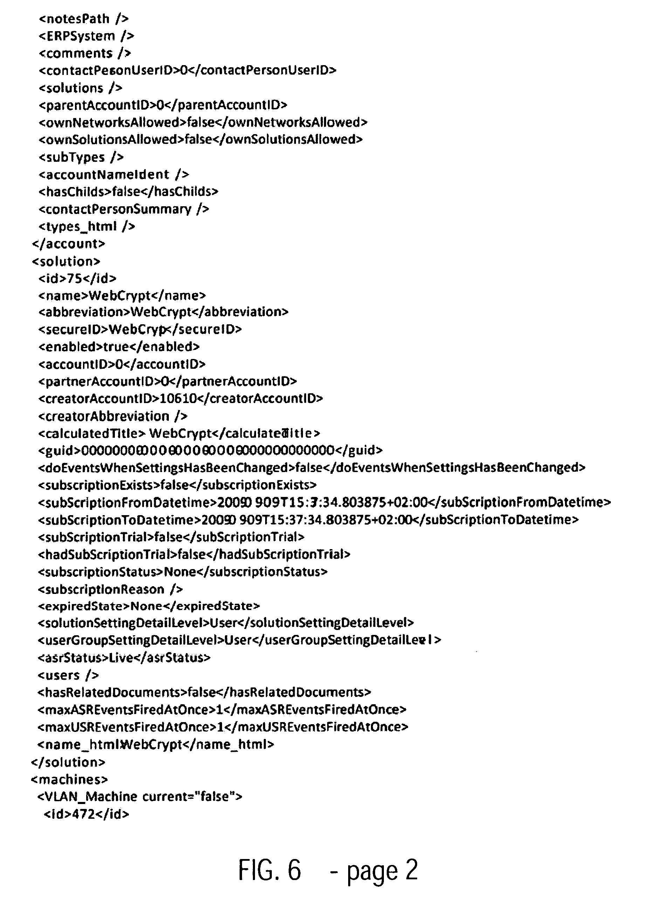

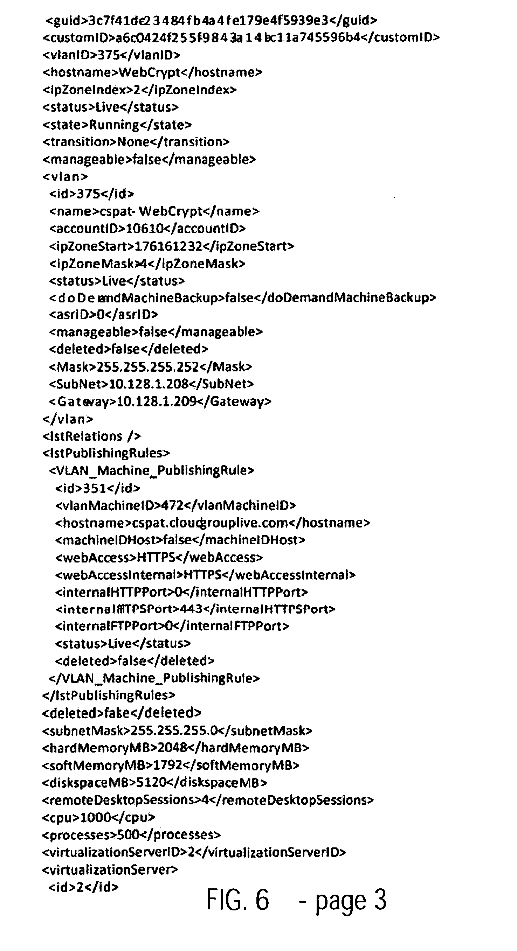

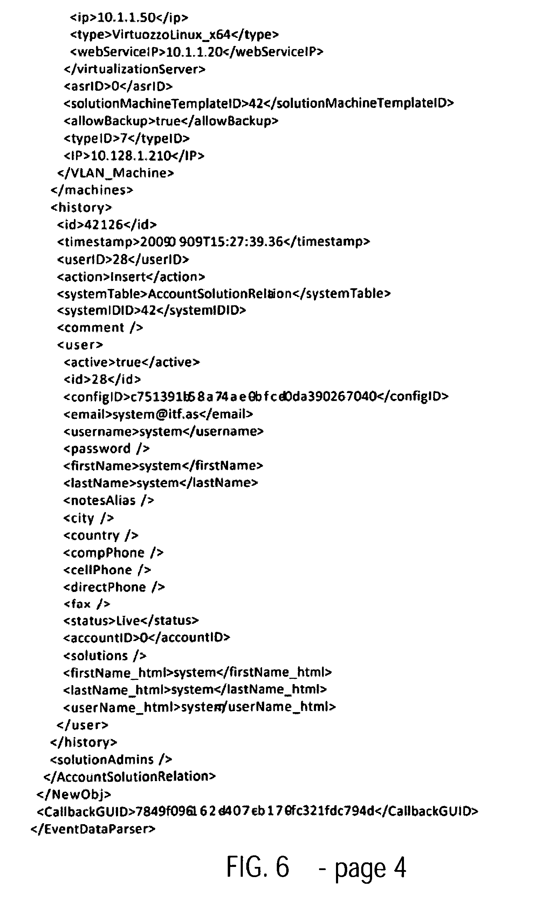

The event will initiate that the platform provides an XML-file including data read out of the configuration data base to the webservice. At the webservice the XML-file is read and predefined routines are carried out, wherein the data of the XML-file are used. An example for such an XML-file is given in Figure 6.

By the interpretation of this XML-file the email is created and the configuration file are created, wherein e.g. the correct URL is specified (CSPAT.cloud.grouplive.com). The configuration files are attached to the email. An example of the email is shown in figure ...

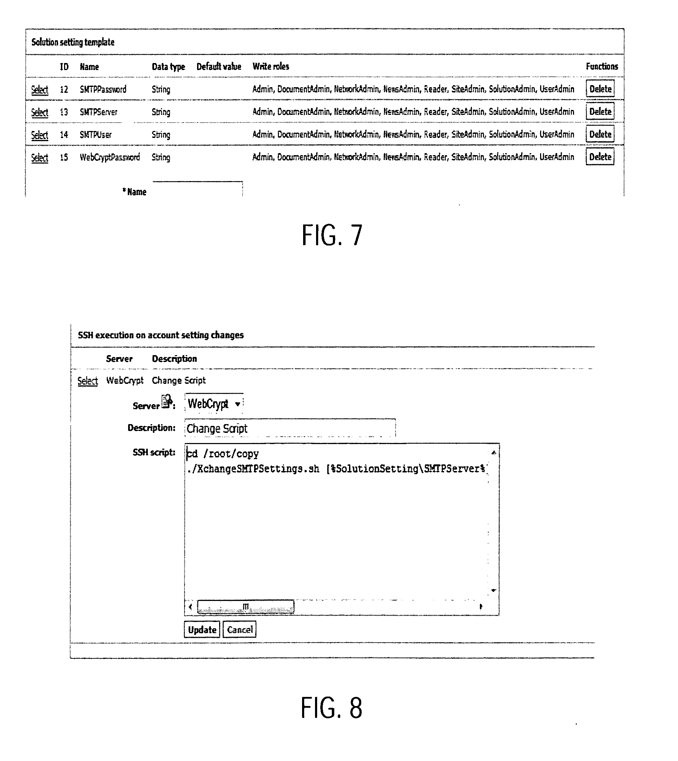

The event system is furthermore used when the solution settings are changed by the user in the platform, particularly in the platform configuration database. Then the virtual server on which the WebCrypt Server is hosted is updated according to the platform configuration database by means of an SSH script. Figure 7 shows solution setting templates which is a part of the platform configuration database and Figure 8 shows an SSH script which is called to change the corresponding settings.

The ordinary software application WebCrypt is fairly complicated to install and setup, which typically requires external consultant to come in and install and configure an on premise system. This is not required when it is used on a platform according to the present invention, where a WebCrypt solution is registered.

Furthermore, WebCrypt requires a Linux operating system. The users of the IQ Suite System often have only a windows server and they do not often have the necessary internal Linux Competences. Thus it is often not possible for them to install the ordinary WebCrypt.

With the platform according to the present invention they just have to subscribe the WebCrypt solution. The needed environment is provided fully automatically, wherein it is secured that for each listener a separate virtual server is provided so that each listener can use the software application WebCrypt completely independent of a further listener who is also using the software application WebCrypt on the same platform. This is particularly important for a software application like WebCrypt, which is designed to encrypt confidential emails.

The platform operating system comprises a load balancing routine. By this load balancing routine all application servers 2 (physical servers) are monitored with respect to the computation load which is caused by the virtual server running on the physical servers. If there are redundant virtual servers on different physical servers then the instances and/or the virtual servers can be automatically started and stopped by the load balance routine for providing on each physical server a similar amount of computation load. It is even possible to shut down or start up automatically a physical server if more or less computational power is needed.

This load balancing routine can also use the above described process for automatically installing an instance thus if more computational power is needed an additional physical server is started up. Then a virtual server is automatically installed together with the corresponding instance and run on the newly started up physical server. By this it is possible to automatically duplicate and/or move virtual servers in the platform so that only the amount of hardware is run which is needed.

This load balancing routine provides a significant saving with respect to electrical power consumption as the number of physical servers can always be kept as low as possible.

**Reference signs**
- 1: platform
- 2: application server
- 3: control server
- 4: data line
- 5: switch
- 6: firewall server
- 7: WAN
- 8: computer
- 9: platform configuration database
- 10: tables
- 11: installation file
- 12: server operating system
- 13: templates
- 14: server installation
- 15: operating system
- 16: instance
- 17: application data

## Claims

1. Process for installing a software application on a platform, wherein the platform comprises several servers including one or more application servers (2) and a control server (3) on which a platform configuration database is installed, comprising the following steps after a predefined software application is selected by an user:
- reading out configuration data and solution data from the platform configuration database wherein the registration data describes the platform configuration and the solution data describes a solution of the selected software application which is registered on the platform,
- determining the virtual server(s) which is needed to run the selected software application,
- creating the determined virtual server(s) on the platform,
- installing an instance of the selected software application in the created virtual server(s),
- connecting the instance to an interface of the platform to provide an access for listeners to the instance.

2. Process according to claim 1,
wherein a private virtual network is created before creating the virtual server(s), wherein the virtual server(s) is/are connected to the private virtual network.

3. Process according to claim 1 or 2,
wherein events are defined and each event is linked to a service, so that if such an event occurs the corresponding service is automatically carried out.

4. Process according to claim 3,
wherein each event points by means of a pointer to one of the services, wherein the pointer is an URL and data of the platform configuration database are provided to the service by means of an XML-file.

5. Process according to one of the claims 1 to 4,
wherein connecting the instance to an interface of the platform is done by automatically programming a firewall.

6. Process according to claim 5,
wherein an URL is automatically created for and assigned to each listener and registered in the firewall.

7. Process according to one of the claims 1 to 6,
wherein the computational load of the servers is automatically monitored by the platform operating system and in dependence of the monitored computational load on each individual physical server the physical servers are automatically shut down or started up.

8. Process according to claim 7,
wherein in dependence of the monitored computational load on each individual physical server a virtual server and an instance in said virtual server are automatically installed or de-installed for balancing the computational loads between the several physical servers.

9. Platform operating system comprising
a platform configuration database and several routines for carrying out a process according to one of the claims 1 to 8.

10. Platform comprising
several servers including one or more application servers (2) and a control server (3), wherein a platform operating system according to claim 9 is installed on the platform to control the platform.

11. Platform according to claim 10,
wherein the platform is comprises a firewall server (6) on which a firewall is installed.

12. Platform according to claim 11,
wherein the platform is connected to the Internet by means of said firewall server (6).
